# EUROPEAN PATENT APPLICATION

(11) **EP 4 636 393 A1**
(43) Date of publication of application: **22.10.2025**
(21) Application number: 22968330.5
(22) Date of filing: 29.12.2022
(51) Int. Cl.: G01N 25/00

(54) **TRANSPIRATION COOLING-BASED THERMAL PROTECTION TEST SYSTEM**

(30) Priority: 12.12.2022 CN 202211599162
(71) Applicant: China Academy of Aerospace Aerodynamics, Beijing 100074 (CN)
(72) Inventor: XU, Kao, Beijing 100074 (CN); FAN, Xiaoqing, Beijing 100074 (CN); FU, Jianzhuang, Beijing 100074 (CN); OU, Dongbin, Beijing 100074 (CN)
(74) Representative: advotec.
(86) International application number: PCT/CN2022/143230
(87) International publication number: WO 2024/124629

(57) **Abstract**

A transpiration cooling-based thermal protection test system. According to the system, high-pressure nitrogen gas is injected into a high-pressure liquid tank (4) from the upper part, to force a liquid (water or oil) to flow to a test cavity (61) along a pipeline; a porous thermal protection material (62) is sealingly mounted on the outer surface of the test cavity (61); and the high-pressure liquid in the test cavity (61) permeates to the outer surface of the porous thermal protection material (62) to resist the scouring of hypersonic high-temperature incoming flow, thereby achieving the purpose of protecting the porous thermal protection material (62). Pressure and temperature measurement devices are additionally provided on the test cavity (61), and a steam electromagnetic valve (9) mounted on the test cavity (61) is controlled by taking the temperature as a feedback signal, so as to discharge a high-temperature and high-pressure gas-liquid mixture in the test cavity (61), thereby avoiding damage of the high-temperature and high-pressure gas-liquid mixture in the test cavity (61) to the porous thermal protection material (62), and achieving the purpose of long-time operation of a transpiration cooling-based thermal protection test.

## Description

### TRANSPIRATION COOLING-BASED THERMAL PROTECTION TEST SYSTEM

The present application claims priority to Chinese Patent Application No. 202211599162.2, filed with China National Intellectual Property Administration on December 12, 2022 and entitled "a transpiration cooling thermal protection test system", the entire content of which is incorporated in the present application by reference.

### FIELD

The present disclosure relates to a transpiration cooling thermal protection test system, aims at a hypersonic vehicle with a thermal protection material of a surface temperature higher than 2000K, and belongs to a technical field of aerospace aerodynamic thermal protection tests.

### BACKGROUND

When a hypersonic vehicle flies in the atmosphere at a high speed, a surface of the hypersonic vehicle is subjected to serious aerodynamic heating. When traditional ablation passive thermal protection manners are already unable to meet thermal protection requirements of this type of vehicle, an active thermal protection is mostly adopted, and a principle of the active thermal protection is to rely on cooling media to take away most of heat. The present invention adopts a manner of transpiration cooling thermal protection.

Thermal protection materials of the hypersonic vehicle most adopts non-metallic materials, such as carbon-based materials, silicon-based materials. Even the maximum resistance ablation temperature of silicon carbide materials resistant to ultra-high temperatures is lower than 1700°C, which is far from meeting use requirements of a new vehicle. Therefore, the active thermal protection technology is paid more and more attention.

For the transpiration cooling thermal protection, following problems exist: on the one hand, the material needs to have a large permeability, and at the same time, there are also strict requirements for the strength of the thermal protection material. When the permeability is large, the material density is small, and the strength is reduced; when the strength is large, the material density is also large, and on the contrary, the permeability is low. Usually, the material permeability is considered under the condition of ensuring the material strength, so that the permeability of the transpiration cooling thermal protection material is relatively small. This leads liquid used for transpiration cooling to stay in a chamber for a long time, the liquid in the chamber is very easy to boil and vaporize under a high temperature condition, so that an internal temperature and a pressure of the chamber are increased significantly, and thus the thermal protection material and a wall surface of the chamber is very easy to be damaged. The present invention is to solve the above problems, so that the liquid in a test chamber operates stably under conditions of a constant temperature and a constant pressure, thus ultimately prolonging transpiration cooling thermal protection time.

### SUMMARY

The technical solution of the present invention is to overcome defects in the related art, provide a transpiration cooling thermal protection test system, and adjust the opening and closing of a steam solenoid valve at a test chamber according to a feedback signal of an armored thermocouple which measures a temperature of the liquid in the test chamber, so that the liquid in the chamber operates under conditions of a constant temperature and a constant pressure, thus prolonging thermal protection time.

The technical solution of the present invention is as follows.

A transpiration cooling thermal protection test system includes: a high-pressure nitrogen gas source 1, a pressure sensor 2, a high-pressure liquid tank 4, a flow meter 5, a test body 6, a K-type armored thermocouple 7, a collection system 8, a steam solenoid valve 9, a throat channel and nozzle assembly 11 and a clamping plate 12.

The test body 6 includes a test chamber 61 and a porous thermal protection material 62, the porous thermal protection material 62 is mounted to the test chamber 61 by a sealant at an end surface of the test chamber 61 and is fixed to a flow channel at an outlet of a nozzle of the throat channel and nozzle assembly 11 by the clamping plate 12 or is fixed at the outlet of the nozzle by a bracket.

A gas flow heated by an arc heater passes through the throat channel and nozzle assembly 11, and flushes the porous thermal protection material 62 in the flow channel downstream of the nozzle; at the same time, the liquid in the high-pressure liquid tank 4 pressurized by the high-pressure nitrogen gas source 1 enters the test body 6 through a pipeline via the flow meter 5, and penetrates into an outer surface of the porous thermal protection material 62 in contact with a supersonic and high-temperature gas flow by means of a high pressure in the test chamber 61, so as to reduce a surface temperature of the porous thermal protection material.

The test body 6 is provided with the pressure sensor 2, the armored thermocouple 7 and the steam solenoid valve 9 connected to the collection system 8, the collection system 8 collects a pressure of the test chamber 61 by the pressure sensor, and the steam solenoid valve 9 is controlled to open or close to relieve the pressure according to a feedback signal of the armored thermocouple 7, thus ensuring that the liquid in the test chamber 61 acts on an inner surface of the porous thermal protection material 62 with a constant pressure and a low temperature.

Further, the high-temperature gas flow is provided by the arc heater, and the supersonic and high-temperature gas flow is provided by the throat channel and nozzle assembly downstream of the arc heater.

Further, the transpiration cooling thermal protection test system further includes a pressure reducing valve 3, and the pressure reducing valve 3 is mounted between the high-pressure nitrogen gas source 1 and the high-pressure liquid tank 4 for reducing the pressure.

Further, both the high-pressure nitrogen gas source 1 and the high-pressure liquid tank 4 are equipped with the pressure sensor 2 for monitoring the pressure.

Further, the transpiration cooling thermal protection test system further includes a return water storage tank 10, and the return water storage tank 10 is connected to the steam solenoid valve 9, for receiving return water.

Further, a total temperature of the supersonic and high-temperature gas flow is not less than 3000K, and the surface temperature of the porous thermal protection material is not less than 2000K when there is no transpiration cooling.

Further, the porous thermal protection material 62 is a porous medium material, the porous thermal protection material 62 is in a shape of a flat plate or a ball head, and the porous thermal protection material 62 is non-metallic.

Further, the porous thermal protection material 62 is mounted with the test chamber 61 by means of end face sealing. When the porous thermal protection material 62 is in the shape of the flat plate, the test body 6 is mounted to the flow channel downstream of the nozzle, and the outer surface of the porous thermal protection material 62 is flush with a side edge of the nozzle. When the porous thermal protection material 62 is in the shape of the ball head, the porous thermal protection material 62 is directly fixed at a position 50-100 mm downstream of the nozzle by the bracket, and the ball head counteracts the supersonic and high-temperature gas flow at the outlet of the nozzle.

Further, the pressure sensor 2, the K-type armored thermocouple 7 and the steam solenoid valve 9 are mounted at a back portion of the test chamber 61, and the K-type armored thermocouple 7 provides a temperature electrical signal.

Further, when the water temperature in the test chamber 61 is higher than 100 °C, the steam solenoid valve 9 is opened to relieve the pressure of the test chamber 61 until the water temperature is less than or equal to 100°C, and then the steam solenoid valve 9 is closed, so as to achieve a stable operation of the cooling liquid in the test chamber 61 and to avoid damage to the porous thermal protection material caused by a pressure increase due to vaporization.

The present invention has following beneficial effects compared with the related art.
(1) The present invention provides the transpiration cooling thermal protection test system, the steam solenoid valve at the test chamber is adjusted to be opened or closed according to the feedback signal of the armored thermocouple which measures the temperature of the liquid in the test chamber, so that the liquid in the chamber operates under the conditions of the constant temperature and the constant pressure, and hence the problem of the vaporization of the cooling liquid in the test chamber is solved, thus prolonging the thermal protection time.
(2) The present invention realizes that the thermal protection material operates under a thermal environment condition that the surface temperature of the thermal protection material is more than 2000K when there is no cooling.
(3) The present invention uses a value measured by the thermocouple in the chamber as the feedback signal for opening or closing the steam solenoid valve, realizing a constant-temperature and constant-pressure adjustment of the liquid in the chamber, and avoiding a result that the thermal protection material is damaged due to the vaporization and pressure increase caused by the long-term high-temperature heating of the liquid in the test chamber.
(4) The present invention measures a flow rate and a pressure of the liquid to obtain transpiration cooling effects under conditions of the flow rate and the pressure.

### BRIEF DESCRIPTION OF THE DRAWINGS

FIG. 1 is a schematic view of a transpiration cooling test system of an embodiment of the present invention.
FIG. 2 is a schematic view of a test body of an embodiment of the present invention.
FIG. 3 is a schematic view of a throat channel and a flow channel of a nozzle of an embodiment of the present invention.

### DETAILED DESCRIPTION

Specific implementations of the present invention are further described in detail below with reference to the accompanying drawings.

The present invention relates to a transpiration cooling thermal protection test system. In the system, high-pressure nitrogen is injected into a high-pressure water tank from an upper portion of the high-pressure water tank and pressurizes the liquid (water or oil) to flow along a pipeline to a test chamber, a porous medium thermal protection material is mounted to an outer surface of the test chamber in a sealed manner, and the high-pressure liquid in the test chamber penetrates into an outer surface of the thermal protection material to resist the flushing of the high supersonic and high-temperature gas flow, thus realizing a purpose of protecting the thermal protection material. The chamber is provided with pressure and temperature measurement devices, and a steam solenoid valve mounted to the chamber is controlled according to the temperature serving as a feedback signal, so that a high-temperature and high-pressure gas-liquid mixture in the chamber is discharged, so as to avoid the damage to the thermal protection material by the high-temperature and high-pressure gas-liquid mixture in the chamber, thus realizing a purpose of a long-term operation the transpiration cooling thermal protection test.

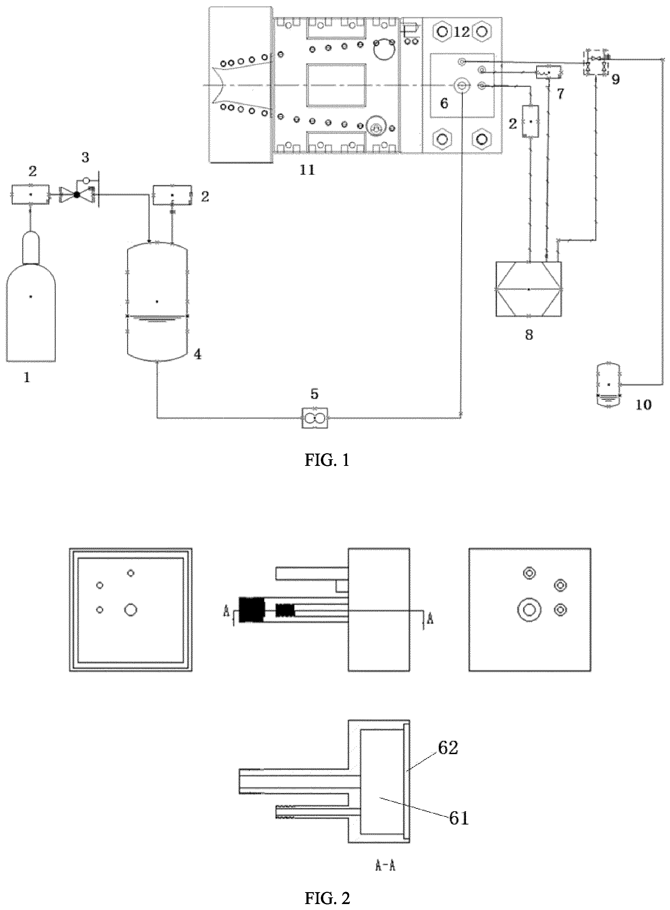

FIG. 1 shows a schematic view of the transpiration cooling test system, and the system includes a high-pressure nitrogen gas source 1, a pressure sensor 2, a pressure reducing valve 3, a high-pressure liquid tank 4, a flow meter 5, a test body 6, a K-type armored thermocouple 7, a collection system 8, a steam solenoid valve 9, a return water storage tank 10, a throat channel and nozzle assembly 11, a clamping plate 12 and a connecting pipe.

The test body 6 includes a test chamber 61 and a porous thermal protection material 62. The porous thermal protection material 62 is mounted to the test chamber 61 by a sealant at an end surface of the test chamber 61 and is fixed to a flow channel at an outlet of a nozzle of the throat channel and nozzle assembly 11 by the clamping plate 12 or is fixed at the outlet of the nozzle by a bracket.

A gas flow heated by an arc heater passes through the throat channel and nozzle assembly 11, and flushes the porous thermal protection material 62 in the flow channel downstream of the nozzle; at the same time, the liquid in the high-pressure liquid tank 4 pressurized by the high-pressure nitrogen gas source 1 enters the test body 6 through a pipeline via the flow meter 5, and penetrates into an outer surface of the porous thermal protection material 62 in contact with the supersonic and high-temperature gas flow by means of a high pressure in the test chamber 61, so as to reduce a surface temperature of the porous thermal protection material.

The high-temperature gas flow is provided by the arc heater, and the supersonic and high-temperature gas flow is provided by the throat channel and nozzle assembly downstream of the arc heater.

The test body 6 is provided with the pressure sensor 2, the armored thermocouple 7 and the steam solenoid valve 9 connected to the collection system 8, the collection system 8 collects a pressure of the test chamber 61 by the pressure sensor, and the steam solenoid valve 9 is controlled to open or close to relieve the pressure according to a feedback signal of the armored thermocouple 7, thus ensuring that the liquid in the test chamber 61 acts on an inner surface of the porous thermal protection material 62 with a constant pressure and a low temperature.

The pressure reducing valve 3 is mounted between the high-pressure nitrogen gas source 1 and the high-pressure liquid tank 4 for reducing the pressure.

Both the high-pressure nitrogen gas source 1 and the high-pressure liquid tank 4 are equipped with the pressure sensor 2 for monitoring the pressure.

The return water storage tank 10 is connected to the steam solenoid valve 9, for receiving return water.

A total temperature of the supersonic and high-temperature gas flow is not less than 3000K, and the surface temperature of the porous thermal protection material is not less than 2000K when there is no transpiration cooling.

Preferably, the porous thermal protection material 62 is a porous medium material, the porous thermal protection material 62 is in a shape of a flat plate or a ball head, and the porous thermal protection material 62 is non-metallic.

The porous thermal protection material 62 is mounted with the test chamber 61 by means of end face sealing. When the porous thermal protection material 62 is in the shape of the flat plate, the test body 6 is mounted to the flow channel downstream of the nozzle, and the outer surface of the porous thermal protection material 62 is flush with a side edge of the nozzle. When the porous thermal protection material 62 is in the shape of the ball head, the porous thermal protection material 62 is directly fixed at a position 50-100 mm downstream of the nozzle by the bracket, and the ball head counteracts the supersonic and high-temperature gas flow at the outlet of the nozzle.

The pressure sensor 2, the K-type armored thermocouple 7 and the steam solenoid valve 9 are mounted at a back portion of the test chamber 61, and the K-type armored thermocouple 7 provides a temperature electrical signal.

When the water temperature in the test chamber 61 is higher than 100°C, the steam solenoid valve 9 is opened to relieve the pressure of the test chamber 61 until the water temperature is less than or equal to 100°C, and then the steam solenoid valve 9 is closed, so as to achieve a stable operation of the cooling liquid in the test chamber 61 and to avoid damage to the porous thermal protection material caused by the pressure increase due to vaporization.

### Embodiments

FIG. 2 is a schematic view of the test body, the back portion of the test body includes an inlet of a main pipeline for the cooling liquid, an interface for the pressure sensor, a threaded interface for the armored thermocouple and an interface for the steam solenoid valve. Another side portion of the test body is provided with the porous medium thermal protection material. If the protection material is a flat plate, end surfaces of four sides of the protection material are sealed to four side surfaces of the test body by a sealant.

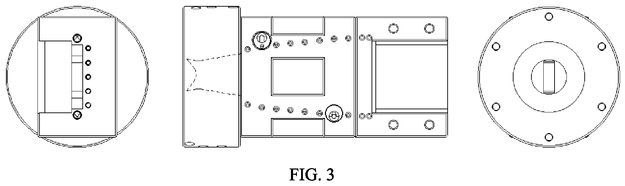

FIG. 3 shows a schematic view of a throat channel of the throat channel and nozzle assembly and the outlet of the nozzle, the throat channel is located upstream of the nozzle, high-temperature and high-pressure thermal gas accelerates to flow after passing through the throat channel, a supersonic and high-temperature gas flow is formed at the outlet of the nozzle, and the gas flow flushes the ablative material. The test body is mounted at a side surface of a pipeline downstream of the nozzle and is flush with an inner wall surface of the upstream nozzle, and at the same time, is sealed to a contact edge of a pipe wall connected to the test body by a sealant.

The pressure reducing valve, the flow meter and the steam solenoid valve are connected to the main pipeline by sealed fittings, and the pressure sensor is connected to a pipeline in a sealed manner by a three-way valve.

The test body includes the test chamber and the porous thermal protection material, the porous thermal protection material is mounted to the test chamber by the sealant at the end surface of the test chamber and is fixed to the flow channel at the outlet of the nozzle by a bolt and the clamping plate or is fixed at the outlet of the nozzle by the bracket. If the thermal protection material is the flat plate, the test body is mounted at the flow channel downstream of the nozzle, and the outer surface of the thermal protection material is flush with the side edge of the nozzle. If the thermal protection material is the ball head, the thermal protection material is directly fixed at the position 50-100 mm downstream of the nozzle by the bracket, and the ball head counteracts the supersonic and high-temperature gas flow at the outlet of the nozzle.

The back portion of the test chamber is welded with pipe fittings to be connected to the main pipe, and also is connected to the pressure sensor and the steam solenoid valve by the pipe fittings, and the K-type armored thermocouple for measuring the temperature of the liquid in the chamber is fixed to the back portion of the test chamber by a threaded hole.

The present invention uses a value measured by the thermocouple in the chamber as the feedback signal for opening or closing the steam solenoid valve, realizing a constant-temperature and constant-pressure adjustment of the liquid in the chamber, and avoiding a result that the thermal protection material is damaged due to the vaporization and pressure increase caused by the long-term high-temperature heating of the liquid in the test chamber.

A part of the present invention which is not described in detail belongs to the common knowledge of those skilled in the art.

## Claims

1. A transpiration cooling thermal protection test system, comprising a high-pressure nitrogen gas source (1), a pressure sensor (2), a high-pressure liquid tank (4), a flow meter (5), a test body (6), a K-type armored thermocouple (7), a collection system (8), a steam solenoid valve (9), a throat channel and nozzle assembly (11) and a clamping plate (12),
wherein the test body (6) comprises a test chamber (61) and a porous thermal protection material (62), the porous thermal protection material (62) is mounted to the test chamber (61) by a sealant at an end surface of the test chamber (61) and is fixed to a flow channel at an outlet of a nozzle of the throat channel and nozzle assembly (11) by the clamping plate (12) or is fixed at the outlet of the nozzle by a bracket;
a gas flow heated by an arc heater passes through the throat channel and nozzle assembly (11), and flushes the porous thermal protection material (62) in the flow channel downstream of the nozzle; at the same time, a liquid in the high-pressure liquid tank (4) pressurized by the high-pressure nitrogen gas source (1) enters the test body (6) by a pipeline via the flow meter (5), and penetrates into an outer surface of the porous thermal protection material (62) in contact with a supersonic and high-temperature gas flow by means of a high pressure in the test chamber (61), so as to reduce a surface temperature of the porous thermal protection material; and
the test body (6) is provided with the pressure sensor (2), the armored thermocouple (7) and the steam solenoid valve (9), the steam solenoid valve (9) is connected to the collection system (8), the collection system (8) collects a pressure of the test chamber (61) by the pressure sensor, and the steam solenoid valve (9) is controlled to open or close to relieve the pressure according to a feedback signal of the armored thermocouple (7), so as to ensure that the liquid in the test chamber (61) acts on an inner surface of the porous thermal protection material (62) with a constant pressure and a low temperature.

2. The transpiration cooling thermal protection test system according to claim 1, wherein a high-temperature gas flow is provided by the arc heater, and the supersonic and high-temperature gas flow is provided by the throat channel and nozzle assembly downstream of the arc heater.

3. The transpiration cooling thermal protection test system according to claim 2, wherein the transpiration cooling thermal protection test system further comprises a pressure reducing valve (3), and the pressure reducing valve (3) is mounted between the high-pressure nitrogen gas source (1) and the high-pressure liquid tank (4) for reducing the pressure.

4. The transpiration cooling thermal protection test system according to claim 3, wherein both the high-pressure nitrogen gas source (1) and the high-pressure liquid tank (4) are equipped with the pressure sensor (2) for monitoring the pressure.

5. The transpiration cooling thermal protection test system according to claim 3, wherein the transpiration cooling thermal protection test system further comprises a return water storage tank (10), and the return water storage tank (10) is connected to the steam solenoid valve (9) for receiving return water.

6. The transpiration cooling thermal protection test system according to any one of claims 1 to 5, wherein a total temperature of the supersonic and high-temperature gas flow is not less than 3000K, and a surface temperature of the porous thermal protection material is not less than 2000K when there is no transpiration cooling.

7. The transpiration cooling thermal protection test system according to claim 6, wherein the porous thermal protection material (62) is a porous medium material, the porous thermal protection material (62) is in a shape of a flat plate or a ball head, and the porous thermal protection material (62) is non-metallic.

8. The transpiration cooling thermal protection test system according to claim 7, wherein the porous thermal protection material (62) is mounted with the test chamber (61) by means of end face sealing; when the porous thermal protection material (62) is in the shape of the flat plate, the test body (6) is mounted to the flow channel downstream of the nozzle, and the outer surface of the porous thermal protection material (62) is flush with a side edge of the nozzle; when the porous thermal protection material (62) is in the shape of the ball head, the porous thermal protection material (62) is directly fixed at a position 50-100 mm downstream of the nozzle by the bracket, and the ball head counteracts the supersonic and high-temperature gas flow at the outlet of the nozzle.

9. The transpiration cooling thermal protection test system according to claim 7, wherein the pressure sensor (2), the K-type armored thermocouple (7) and the steam solenoid valve (9) are mounted at a back portion of the test chamber (61), and the K-type armored thermocouple (7) provides a temperature electrical signal.

10. The transpiration cooling thermal protection test system according to claim 9, wherein when a water temperature in the test chamber (61) is higher than 100°C, the steam solenoid valve (9) is opened to relieve the pressure of the test chamber (61) until the water temperature is less than or equal to 100°C, and then the steam solenoid valve (9) is closed, so as to achieve a stable operation of a cooling liquid in the test chamber (61) and to avoid damage to the porous thermal protection material caused by pressure increase due to vaporization.
